# EUROPEAN PATENT APPLICATION

(11) **EP 3 959 968 A1**
(43) Date of publication of application: **02.03.2022**
(21) Application number: 20193172.2
(22) Date of filing: 27.08.2020
(51) Int. Cl.: A01K 1/01

(54) **MANURE REMOVAL DEVICE**

(71) Applicant: Stichting Wageningen Research, 6708 PB Wageningen (NL); Wageningen Universiteit, 6708 PB Wageningen (NL)
(72) Inventor: BOS, Abraham Paulus, 1074 ET AMSTERDAM (NL); BLAAUW, Samuel Kornelis, 6721 TA BENNEKOM (NL); DERKS, Marjolein, 1821 CG ALKMAAR (NL); GOSELINK, Yvo Stefan Maria, 6702 AB WAGENINGEN (NL)
(74) Representative: EP&C

(57) **Abstract**

Manure removal device, configured to be moved in a horizontal movement direction through a substrate arranged on a floor of a poultry barn, in order to remove manure particles from the substrate.

The device comprises a top plane, which is configured to form a support for the substrate to rest on. The manure removal is configured to be moved with respect to the substrate, in order to effect an upward displacement of the substrate over the first ramp portion relative to the manure removal device and to agitate the substrate therewith.

## Description

### Field of the invention

The present invention relates to a manure removal device for removing manure particles from a substrate in a poultry barn. The present invention further relates to a manure removal system and to a method for removing manure particles from a substrate.

### State of the art

In present day non-cage poultry housings, poultry is able to freely move through the barn. Floors in these barns are generally covered with a loose substrate that enables the poultry, for example chicken, to perform their natural behaviour, e.g. for exploration, scratching, dustbathing and for foraging in the substrate. The substrate is generally formed by litter, such as wood shavings or the like. This substrate is initially present when a new flock of poultry is brought into the barn. Over time, generally in the course of a few weeks, poultry manure accumulates in the substrate, since the poultry generally also defecates in or on the substrate and since the initial substrate decays.

Initially, the manure is relatively moist and mainly comprises coarse lumps, which may have an average size of 2 cm to 3 cm. Over time, e.g. possibly even within a few hours, however, the manure tends to become dryer and may disintegrate into particles that are relatively fine, as a result of the scratching, scraping and dust bathing of the poultry. Furthermore, the drying manure may release ammonia (NH₃) from the substrate. The fine manure particles may have a particle size of less than 100 µm (PM100) and are inhalable by humans, but may have even smaller particles sizes of less than 10 µm (PM10), or even less than 2.5 µm (PM2.5).

These inhalable particles have been found to be hazardous for the wellbeing of the poultry and of humans. This is in particular the case, since they contain microbes and microbial compounds, such as endotoxins, that may give rise to severe inflammatory responses. The health of poultry farmers, workers and people living in the surroundings of the barn may be adversely affected as a result. The released ammonia may damage biodiversity by eutrophication and/or acidification when emitted from the barn and deposited elsewhere. Further, ammonia is a precursor for secondary particulate matter.

In an aim to reduce the influence of poultry barns on their surroundings, several ways of removing manure out of the barn have been proposed, in order to reduce the presence of fine manure particles and the release of ammonia. At present, it is most common to either manually or automatically scrape off part of the substrate, in order to remove the source of particulate matter from the substrate. In this way, the fine manure particles are removed from the place at which they may normally end up in the air, e.g. aerosolize, in particular at the surface of the substrate, primarily as the result of the scratching behaviour of the poultry. The substrate can, at least in some jurisdictions, for instance in the European Union, only be removed partially, since it is obligatory there to always have a certain area of the barn covered with substrate.

This scraping of the substrate does, however, give rise to some drawbacks. The removal of the fine manure particles may be limited, e.g. not being sufficient for entirely preventing the air from being polluted. Furthermore, the current partial removal of the substrate still leaves manure particles present in the barn, with as a consequence that the poultry farmer, who needs to go into the barns, and the animals still become exposed to the fine manure particles and ammonia in the air.

### Object of the invention

It is therefore an object of the invention to provide a manure removal device that lacks one or more of the above-mentioned drawbacks, or at least to provide an alternative manure removal device.

### Detailed description

The present invention provides a manure removal device, configured to be moved in a horizontal movement direction through a substrate arranged on a floor of a poultry barn in order to remove manure particles from the substrate, comprising a top plane, which is configured to form a support for the substrate to rest on. The top plane comprises a first ramp portion comprising a front edge, seen with respect to a first horizontal movement direction. The manure removal device is configured to be moved in the first horizontal movement direction with respect to the substrate, in order to effect an upward displacement of the substrate over the first ramp portion relative to the manure removal device and to agitate the substrate therewith.

The substrate in the barn may be organic or anorganic and may be suitable for facilitating foraging behavior by poultry. Other than the coarse manure lumps that disintegrate into fine manure particles, the substrate itself will not decompose, or at most at a rate that is much lower than the decomposition rate of the manure, whereas the average particle size of the substrate is larger than that of fine manure particles. Additionally, the substrate may have a thermal insulating capacity and a buffering capacity for moisture during the day, e.g. to facilitate drying of the manure. As an example, the substrate may be formed by wood chips with a diameter of 4 - 6 mm, that may have a high content of lignin and are therefore more durable against decomposition than manure.

With the present manure removal device, the substrate in the barn is agitated, e.g. tempested during use of the manure removal device. The relative displacement of the manure removal device with respect to the substrate will effect a density-based, e.g. particle-size - based separation in the substrate. This effect is also known as percolation. Fine particles, such as the fine manure particles in the substrate, have a relatively large degree of packing and therefore have a large bulk density, wherein this bulk density is defined as an overall density of the particles and possible voids in between the particles. For small particles, this bulk density is high, due to the relatively small volume of the voids in between the particles. The coarse lumps of manure and the litter, initially present in the substrate, have a far lower degree of packing, e.g. more voids in between them, and as a result have a lower bulk density, although the density of the particles themselves may be similar. As a result of agitation, the fine manure particles may sink below the coarser particles as a result of their smaller size and larger bulk density.

As a result, the fine manure particles become submerged underneath the coarser particles of the substrate, which reduces the hazardous properties of the fine manure particles as they tend to become shielded from the surroundings by the coarser particles of the substrate on top of them. In particular, the shielded fine manure particles may not aerosolize, which may prevent them from being inhaled and from being spread via ventilation systems.

The top plane of the manure removal device may be provided as a metal plate, for example a steel plate, such as a stainless steel plate, that comprises a front edge that is configured to closely abut the floor of the barn, preferably to contact the floor by resting thereon. Seen from the front edge, the first ramp portion of the top plane extends both horizontally and vertically away at an angle, e.g. a non-right angle with respect to the floor and with respect to vertical direction, preferably at a sharp angle.

During use, the manure removal device is moved through the barn, wherein the front edge of the first ramp portion is configured to be skid underneath at least part of the substrate, for example in a wedge-like manner. The part of the substrate that is located on the first ramp portion is, in the first horizontal movement direction, blocked by neighbouring substrate, thereby preventing horizontal movement of this part of the substrate in the first horizontal movement direction. As a result, the part of the substrate is moved upward over the first ramp portion upon movement of the manure removal device in the first horizontal movement direction. As a result, the moving manure removal device will effect a vertical displacement of the substrate arranged on the first ramp portion, thereby effecting the agitation and resulting density-based, e.g. particle-size -based separation of the substrate.

In a further embodiment, the manure removal device further comprises a bottom plane that comprises a front edge, seen with respect to the first horizontal movement direction, wherein the manure removal device is adapted to rest on the floor and/or substrate with the bottom plane. The front edge of the bottom plane is connected to the front edge of the first ramp portion, and the first ramp portion is aligned at a first sharp angle with the bottom plane, in order to form a nose portion between the first ramp portion and the bottom plane.

The bottom plane may function as a support for the manure removal device for resting of the floor of the barn or on a lower layer of the substrate, depending on the desired depth in the substrate at which the manure removal device is to be moved through the substrate.

The bottom plane of the manure removal device may also be provided as a metal plate, for example a steel plate, such as a stainless steel plate. The front edge of the bottom plane may be fixedly connected to the front edge of the first ramp portion, for example by means of a welded connection, e.g. a single weld extending between the front edges in a transverse horizontal direction, perpendicular to the horizontal movement direction.

Alternatively, the bottom plane and the top plane, e.g. at least the first ramp portion of the top plane, may be made of the same plate, e.g. a steel plate, which is folded at the nose portion at a sharp angle to define the bottom plane and the first ramp portion of the top plane.

The nose portion between the bottom plane and the first ramp portion defines a sharp angle, also known as an acute angle, e.g. an angle in between 0° and 60°, to facilitate the nose portion to skid underneath the substrate. The sharp angle may contribute to the wedge-like effect of the manure removal device of having manure particles moved upwards over the first ramp portion.

In a further embodiment, the top plane further comprises a second ramp portion comprising a rear edge, seen with respect to the first horizontal movement direction. The manure removal device is further configured to be moved in a second horizontal movement direction with respect to the substrate, aligned anti-parallel with the first horizontal movement direction, in order to effect an upward displacement of the substrate over the second ramp portion relative to the manure removal device and to agitate the substrate therewith.

Additionally, the bottom plane may further comprise a rear edge, which is located opposite to its front edge, seen with respect to the first horizontal movement direction. The rear edge of the bottom plane is thereby connected to the rear edge of the second ramp portion and the second ramp portion is aligned at a second sharp angle with the bottom plane, in order to form a tail portion between the second ramp portion and the bottom plane.

The manure removal device according to this embodiment may not only comprise a nose portion, as described above, but may additionally comprise a tail portion. The tail portion may be located opposite to the nose portion, facing in the second horizontal movement direction. The manure removal device according to this embodiment can be used in two opposite directions for removing fine manure particles: by moving the manure removal device in the first horizontal direction, the substrate is moved over the first ramp portion to effect the density-based, e.g. particle-size -based separation, and by moving the manure removal device back in the second horizontal direction, the substrate is moved over the second ramp portion to also effect the density-based, e.g. particle-size -based separation.

Seen from the side, e.g. seen in the transverse horizontal direction, perpendicular to the horizontal movement direction, the manure removal device may be mirror symmetric through a mirror plane that is aligned perpendicular to the horizontal movement direction. Hence, the first ramp portion may be opposed by the second ramp portion and/or the nose portion may be opposed by the tail portion.

The rear edge of the top plane is configured to closely abut the floor of the barn, preferably to contact the floor by resting thereon. Seen from the rear edge, the second ramp portion of the top plane extends both horizontally and vertically away at an angle, e.g. a non-right angle with respect to the floor and with respect to vertical direction, preferably at a sharp angle. Similar as the first ramp portion, the second ramp portion is configured to skid underneath at least part of the substrate upon movement of the manure removal device in the second horizontal movement direction.

The rear edge of the bottom plane may be fixedly connected to the rear edge of the second ramp portion, for example by means of a welded connection, e.g. a single weld extending between the rear edges in a transverse horizontal direction, perpendicular to the horizontal movement directions.

Alternatively, the bottom plane and the top plane, e.g. at least the second ramp portion of the top plane, may be made of the same plate, e.g. a steel plate, which is folded at the tail portion at a sharp angle to define the bottom plane and the second ramp portion of the top plane.

The tail portion between the bottom plane and the second ramp portion may also define a sharp angle, to facilitate the tail portion to skid underneath the substrate. The sharp angle may contribute to the wedge-like effect of the manure removal device of having manure particles moved upwards over the second ramp portion.

In a further embodiment, the first ramp portion further comprises a rear edge, which is located opposite to its front edge, seen with respect to the first horizontal movement direction, and the second ramp portion further comprises a front edge, which is located opposite to its rear edge, seen with respect to the first horizontal movement direction. The rear edge of the first ramp portion is connected to the front edge of the second ramp portion.

According to this embodiment, the first ramp portion extends in a plane, e.g. a plane at least having a horizontal component aligned in the horizontal movement direction, between its front edge and its rear edge. Similarly, the second ramp portion extends in a plane, e.g. a plane at least having a horizontal component aligned in the horizontal movement direction, between its front edge and its rear edge as well.

The rear edge of the first ramp portion is directly connected to the front edge of the second ramp portion, wherein this connection forms a top part of the manure removal device. Seen from the side, e.g. in a transverse horizontal direction, perpendicular to the horizontal movement direction, the manure removal device may have a triangular shape, with the first ramp portion forming a first leg of the triangle, the second ramp portion forming a second leg of the triangle and the floor of the barn, e.g. the bottom plane, forming a third leg of the triangle.

Preferably, the triangular shape is a mirror symmetric triangle, having a mirror plane through the connection between the rear edge of the first ramp portion and the front edge of the second ramp portion, which mirror plane is aligned perpendicular to the horizontal movement direction. Hence, the first ramp portion, e.g. the first leg of the triangle, may be opposed by the second ramp portion, e.g. the second leg of the triangle.

The rear edge of the first ramp portion may be fixedly connected to the front edge of the second ramp portion, for example by means of a welded connection, e.g. a single weld extending between both edges in the transverse horizontal direction

Alternatively, the first ramp portion and the second ramp portion are made of the same plate, e.g. steel plate, which is folded to define the first ramp portion and the second ramp portion of the top plane. Preferably, this folding angle is a blunt angle, also known as an obtuse angle, e.g. an angle in between 90° and 180°.

In an alternative or additional embodiment, the first ramp portion further comprises a rear edge, which is located opposite to its front edge, seen with respect to the first horizontal movement direction, and the top plane further comprises a flat portion comprising a front edge, seen with respect to the first horizontal movement direction. The flat portion is, during use of the manure removal device, adapted to be aligned substantially parallel to the floor of the barn and spaced at a distance from the floor in a vertical direction, perpendicular to the horizontal movement direction, thereby defining a height of the manure removal device. The rear edge of the first ramp portion is connected to the front edge of the flat portion.

According to this embodiment, the top plane has a flat portion, e.g. a portion that is aligned parallel to the floor during use of the manure removal device, that forms a continuation of the first ramp portion. During use, the substrate thus first passes over the first ramp portion, e.g. being moved upwards, and then passes over the flat portion, e.g. remaining elevated at the height of the manure removal device. Accordingly, the entire flat portion forms a top part of the manure removal device. The benefit of the substrate remaining elevated is that the substrate may be agitated further, thereby increasing the degree at which the density-based, e.g. particle-size -based separation is effected.

The flat portion may be aligned substantially parallel to the bottom plane and may be spaced at a distance from the bottom plane in a vertical direction.

The flat portion may be aligned at a non-right angle with respect to the first ramp portion. Preferably, this angle is a blunt angle, wherein the angle between the first ramp portion and the floor, e.g. the bottom plane, and the angle between the flat portion and the first ramp portion together add up to 180°.

The rear edge of the first ramp portion may be fixedly connected to the front edge of the flat portion, for example by means of a welded connection, e.g. a single weld extending between both edges in the transverse horizontal direction.

Alternatively, the first ramp portion and the flat portion are made of the same plate, e.g. steel plate, which is folded to define the first ramp portion and the flat portion of the top plane.

In a further embodiment, the flat portion further comprises a rear edge, which is located opposite to its front edge, seen with respect to the first horizontal movement direction, and the front edge of the second ramp portion is connected to the rear edge of the flat portion.

The manure removal device according to this embodiment can also be used in an opposite direction, e.g. by a back movement in the second horizontal direction, to move the substrate over the second ramp portion. The flat portion thereby also forms a continuation of the second ramp portion so that, during use, the substrate thus first passes over the second ramp portion, e.g. being moved upwards, and then passes over the flat portion, e.g. remaining elevated at the height of the manure removal device.

The flat portion may be aligned at a non-right angle with respect to the second ramp portion. Preferably, this angle is a blunt angle, wherein the angle between the first ramp portion and the floor, e.g. the bottom plane, and the angle between the flat portion and the first ramp portion together add up to 180°.

Seen from the side, e.g. in a transverse horizontal direction, perpendicular to the horizontal movement direction, the manure removal device may have a trapezium shape, with the first ramp portion forming a first standing edge of the trapezium, the second ramp portion forming a second standing edge of the trapezium, the flat portion forming a first flat edge of the trapezium and the floor of the barn, e.g. the bottom plane, forming a second flat edge of the trapezium.

Preferably, the trapezium shape is a mirror symmetric trapezium, e.g. an isosceles trapezium, having a mirror plane midway through the flat portion that is aligned perpendicular to the horizontal movement direction. Hence, the first ramp portion, e.g. the first standing edge of the trapezium, may be opposed by the second ramp portion, e.g. the second standing edge of the trapezium and/or the nose portion may be opposed by the tail portion.

The front edge of the second ramp portion may be fixedly connected to the rear edge of the flat portion, for example by means of a welded connection, e.g. a single weld extending between both edges in the transverse horizontal direction

Alternatively, the second ramp portion and the flat portion are made of the same plate, e.g. steel plate, which is folded to define the second ramp portion and the flat portion of the top plane.

In an embodiment, the top plane defines an interior of the manure removal device, e.g. the top plane defines the interior underneath itself. At least part of the first ramp portion, the second ramp portion and/or the flat portion comprises a mesh to provide access towards the interior of the manure removal device, and the manure removal device is configured to enable the manure particles to enter into its interior via the mesh. A mesh width of the mesh is preferably between 1 mm and 5 mm, for example 2.5 mm.

The interior of the manure removal device is shielded from the substrate by the top plane, which forms a separation between the substrate, e.g. on top of it, and the interior of the manure removal device, e.g. underneath it.

The mesh in the top plane may be provided in one or more of the first ramp portion, the second ramp portion and/or the flat portion, to allow fine manure particles to enter the interior of the manure removal device, but to prevent coarse lumps of manure and the substrate itself from entering the interior. Once collected in the interior of the manure removal device, the fine manure particles are trapped and cannot escape again into the substrate. In this way, the manure particles are not only removed from the surface towards the bulk of the substrate, e.g. to prevent them from ending up in the air, but are instead completely removed from the substrate.

The mesh in the top plane may be provided as a large number of openings, for example circular openings, in a solid plate, or may be provided by a grid, for example a two-dimensional grid of wires, in between which apertures are formed. It was found by the inventor that a mesh with a mesh width, e.g. an average dimension of the openings or apertures, between 1 mm and 5 mm provides adequate results in terms of the removal of fine manure particles from the substrate. In particular with a mesh size of 2.5 mm, the mesh may adequately remove the hazardous fine manure particles with a particle size of less than 10 µm (PM10), or possibly even less than 2.5 µm (PM2.5), from the substrate into the interior of the manure removal device.

The interior of the manure removal device may further be defined by the bottom plane, which may delimit the interior from underneath, to also prevent the substrate from entering the interior from below. Furthermore, the manure removal device may comprise side planes, which are aligned in a vertical direction parallel to the horizontal movement direction and which abut the first ramp portion, the second ramp portion, the flat portion and/or the bottom plane at their respective side edges.

In an alternative embodiment, a bottom plane is absent, but the top plane thereby closely abuts the floor of the barn, preferably contacting the floor by resting thereon, to prevent substrate from moving underneath the top plane and into the interior of the manure removal device. In particular, the front edge of the first ramp portion and, if any, the rear edge of the second ramp portion, are configured to rest on the floor to prevent entry of the substrate into the interior. Furthermore, the absence of a passage between the front edge of the first ramp portion and the floor and the absence of a passage between the rear edge of the second ramp portion and the floor may provide that any fine manure particles accumulated in the interior of the manure removal device cannot escape back into the substrate during the movement of the manure removal device. Instead, these fine manure particles in the interior of the manure removal device may be dragged along by inner surfaces of the ramp portions.

The manure removal device may additionally comprise one or more scraper elements at the front edge of the first ramp portion and/or at the rear edge of the second ramp portion to contribute in the dragging of the fine manure particles inside the interior of the manure removal device, e.g. in the absence of a bottom plane. The scraper elements may, for example, be embodied as a brush or a flexible plate, such as a plastic flexible plate, to contact the floor and to closely follow the contours of the floor during movement of the manure removal device.

In an embodiment, the first sharp angle and/or the second sharp angle is in between 10° and 60°, for example about 30°. With a first sharp angle, e.g. the angle between the floor and the first ramp portion, and the second sharp angle, e.g. the angle between the floor and the second ramp portion, in this range, the agitating of the substrate may be done sufficiently, while a frictional force of the substrate acting on the moving manure removal device may be low enough.

Furthermore, with the first sharp angle and/or the second sharp angle in this range, it may be prevented that the manure removal device will act as a plough, merely pushing the substrate in front of itself and not letting the substrate move over the ramp portions.

In an embodiment, the height of the manure removal device in the vertical direction is in between 5 mm and 25 mm, for example 15 mm. This height of the manure removal device may be defined as a vertical dimension of the manure removal device in between the floor and the connection between the first ramp portion and the second ramp portion or as a vertical dimension of the manure removal device in between the floor and the flat portion of the top plane, in between the first ramp portion and the second ramp portion.

For example, the height of the manure removal device may be selected in relation to the thickness of the substrate in the barn. The height of the manure removal may be selected below 50% of the substrate thickness to enable the substrate to exert a counter-pressure that is sufficient to allow the manure removal device to be skid underneath the substrate with its nose portion and/or its tail portion.

In an embodiment, a width of the manure removal device in the horizontal movement direction is in between 50 mm and 200 mm, for example 120 mm. This width of the manure removal device may be defined as the horizontal width in between the front edge of the first ramp portion and the rear edge of the second ramp portion.

In an embodiment, a length of the manure removal device in a transverse horizontal direction, perpendicular to the horizontal movement direction, is in between 500 mm and 2000 mm, for example 1150 mm. This length of the manure removal device may be defined as the horizontal length along the entire front edge of the first ramp portion and/or, if present, along the entire rear edge of the second ramp portion.

The present invention further provides a manure removal system for removing manure particles from a substrate arranged on a floor of a poultry barn, comprising the manure removal device as described herein. The manure removal system further comprises at least one actuator device, for example comprising a winch, and at least one line, for example a cable and/or a chain. Each line comprises a first end that is attached to the manure removal device and a second end, opposite to the first end, that is attached to the actuator device. The at least one actuator device is configured to be positioned stationary in the poultry barn and configured to pull in the at least one line along a horizontal movement direction, in order to move the manure removal device through the substrate.

In the manure removal system, the actuator device is a stationary component, for example arranged at an end of the barn. The actuator device is configured to pull-in the line that is attached to the manure removal device. Accordingly, the manure removal device is moved towards the actuator device through the substrate, since the actuator device remains stationary, e.g. at least during the pulling on the line.

In this way, the manure removal system may remove the fine manure particles from the substrate autonomously, as it requires no human labour to move the manure removal device through the barn.

The at least one line may be a single set of two lines, e.g. two lines extending parallel to each other in between the actuator device and the manure removal device, in order to effect even and symmetric pulling on the manure removal device. The two lines may further contribute in keeping the manure removal device aligned perpendicular to the horizontal movement direction, in order to maximize its effective length, e.g. in the transverse direction perpendicular to the horizontal movement direction, to maximize the amount of the substrate that is agitated.

In a further embodiment, the manure removal system comprises two actuator devices and two lines, e.g. two sets of lines that each comprise two parallel lines. A first one of the actuator devices is connected to the manure removal device via a first set of lines and a second one of the actuator devices is connected to the manure removal device via a second set of lines. The first actuator device is configured to be positioned at a first end of the barn and the second actuator device is configured to be positioned at a second end of the barn, located opposite to the first end of the barn, e.g. when seen in the horizontal movement direction of the manure removal device. The first actuator device is configured to pull the manure removal device in a first horizontal movement direction via the first set of lines, and the second actuator device is configured to pull the manure removal device in a second horizontal movement direction, aligned anti-parallel with the first horizontal movement direction, via the second set of lines.

Each of the actuator devices is stationary positioned at a respective opposite end of the barn and each actuator device is configured to pull the manure removal device in respective opposite directions, e.g. in the first horizontal movement direction and in the second horizontal movement direction. Both actuator devices are thereby, together, configured to move the manure removal device in a back-and-forth manner.

The back-and-forth movement may be useful in moving the manure removal device in the first horizontal movement direction for agitating the substrate and for moving the manure removal device back to an initial position in the second movement direction, without requiring separate, for example manual repositioning of the manure removal device after arriving at the first actuator device.

However, in embodiments where the manure removal device comprises both the first ramp portion and the second ramp portion, the back-and-forth movement may be beneficial for agitating the substrate in both opposite directions, e.g. with the first ramp portion when the manure removal device is pulled in the first movement direction and with the second ramp portion when the manure removal device is pulled in the second movement direction.

The present invention also provides a manure removal system for removing manure particles from a substrate arranged on a floor of a poultry barn, comprising the manure removal device as described herein. This manure removal system also comprises an actuator device, for example comprising one or more traction wheels or one or more caterpillar tracks. The actuator device is configured to exert a propulsion force between the manure removal device and the floor and/or the substrate, wherein the propulsion force is aligned in a horizontal movement direction, and wherein the propulsion force is configured to move the manure removal device through the substrate.

Compared to the manure removal systems described above, the actuator device of this manure removal system is directly attached to the manure removal device to move the manure removal device through the barn. This actuator device is not mounted stationary, but, instead, configured to be moved together with the manure removal device.

The actuator device is configured to apply a propulsion force with respect to the floor of the barn and/or with respect to the substrate, for example depending on whether the manure removal device rests directly on the floor during use, or whether a layer of substrate is present in between the floor and the manure removal device.

The actuator device may comprise one or more wheels or one or more caterpillar tracks, which may be driven by a motor, such as an electric motor, to freely move the manure removal device through the barn. A rotary torque of the motor may be converted into the propulsion force, which is configured to act on the floor and/or the substrate during use, for propelling the manure removal device.

In an embodiment, a manure removal system further comprises a base station, configured to form a shielded storage location for the manure removal device. The base station comprises a rotatable plate, comprising a front end that is, in a rest position of the plate, configured to rest on the floor of the poultry barn and a rear end that is attached to a hinge at an elevated location. A height of the elevated location substantially corresponds to the height of the manure removal device. The rotatable plate is configured to form a support for the substrate to rest on. The base station further comprises at least one rib, attached to the rotatable plate at the front end thereof and extending away from the rotatable plate and, in the rest position, away from the floor. The manure removal device is configured to be moved underneath the at least one rib with its nose portion and/or its tail portion, in order to upwardly rotate the rotatable plate towards an elevated shielding position with the at least one rib sliding over the respective first ramp portion and/or second ramp portion. Further, the manure removal device is configured to be moved underneath the rotatable plate.

The base station is configured to protect the manure removal device when it is inactive, e.g. not being in use to agitate the substrate for removing fine manure particles. In this deactivated state, it may be desired to not have the manure removal device being in contact with the substrate and it may be desired to keep the manure removal device out of reach of the poultry, e.g. preventing damaging of the manure removal device by scraping of the poultry and/or preventing the poultry from hurting themselves.

Additionally, in embodiments where the manure removal device is provided with a mesh in its top plane, the protective base station may be configured to prevent the interior of the manure removal device from filling up with particles when the manure removal is inactive.

The base station comprises the rotatable plate, on which the substrate is configured to rest, in order to shield the area underneath the rotatable plate from the substrate. In the rest portion, the rotatable plate is tilted, e.g. tilted downwardly from the hinge, since the hinge is located above the floor of the barn.

To move the manure removal device underneath the rotatable plate, the nose portion or the tail portion, e.g. depending on whether the first ramp portion or the second ramp portion is moved underneath the rotatable plate first, is moved underneath the one at least one rib that is attached to the rotatable plate at the front end. In the rest position of the rotatable plate, the at least one rib may be spaced at a distance from the floor, e.g. a distance larger than the height of the nose portion and/or tail portion of the manure removal device, to allow the nose portion or the tail portion to be moved underneath it.

When the manure removal device is then moved further underneath the rotatable plate, the at least one rib and/or the front end of the rotatable plate is configured to slide over the nose portion or tail portion of the manure removal device, to upwardly tilt the rotatable plate towards the elevated shielding position. In the elevated shielding position, the rotatable plate is located above the maximum height of the manure removal device, allowing the manure removal device to be arranged underneath the rotatable plate, e.g. at least with the part of the manure removal device's top plane that is provided with the mesh.

In a further embodiment, the base station is configured to remove fine manure particles from the interior of the manure removal device when the manure removal device is located underneath the rotatable plate.

In this way, the accumulated fine manure particles can be removed after use and the manure removal device can be prepared for further use, e.g. for one or more further passes through the barn.

The invention also provides a method for removing manure particles from a substrate arranged on a floor of a poultry barn, comprising the steps of:
arranging a manure removal device as described herein on the floor of the poultry barn,
moving the manure removal device through the substrate in a horizontal movement direction, and
agitating the substrate by effecting an upward displacement of the substrate over the first ramp portion and/or the second ramp portion of the manure removal device, thereby effecting a density-based, e.g. particle-size -based separation of relatively small manure particles sinking in the substrate.

According to the present method, the substrate in the barn is agitated, e.g. tempested during use of the manure removal device. Relative displacements between the substrate and the manure removal device will effect a density-based, e.g. particle-size -based separation in the substrate. This effect is also known as percolation. Fine particles, such as the fine manure particles in the substrate have a relatively large degree of packing and therefore have a large bulk density, wherein this bulk density is defined as an overall density of the particles and possible voids in between the particles. For small particles, this bulk density is high, due to the relatively small volume of the voids in between them. The coarse lumps of manure and the litter, initially present in the substrate, have a far lower degree of packing, e.g. more voids in between them, and have a lower bulk density as a result, although the density of the particles themselves may be similar. As a result of the agitation, the fine manure particles may sink below the coarser particles as a result of their smaller size and larger bulk density.

As a result, the fine manure particles become submerged underneath the coarser particles of the substrate, which reduces the hazardous properties of the fine manure particles as they tend to become shielded from the surroundings by the coarser particles of the substrate on top of them. In particular, the shielded fine manure particles may not end up in the air, which may prevent them from being inhaled and from being spread via ventilation systems.

When carrying out the present method, the manure removal device is moved through the barn, wherein the front edge of its first ramp portion is configured to skid underneath at least part of the substrate, for example in a wedge-like manner. The part of the substrate that is located on the first ramp portion is moved upward over the first ramp portion upon movement of the manure removal device. As a result, the moving manure removal device will effect a vertical displacement of the substrate arranged on the first ramp portion, thereby effecting the agitation and resulting density-based, e.g. particle-size -based separation of the substrate.

In an embodiment, the method further comprises the step of collecting the manure particles in an interior of the manure removal device via mesh in the first ramp portion, the second ramp portion and/or the flat portion of the manure removal device.

The interior of the manure removal device is shielded from the substrate by the top plane, which forms a separation between the substrate, e.g. on top of it, and the interior of the manure removal device, e.g. underneath it.

The mesh in the top plane may be provided in one or more of the first ramp portion, the second ramp portion and/or the flat portion, to allow fine manure particles to enter the interior of the manure removal device, but to prevent coarse lumps of manure and the substrate itself from entering the interior. Once collected in the interior of the manure removal device, the fine manure particles are trapped and cannot escape again into the substrate. In this way, the manure particles are not only removed from the surface towards the bulk of the substrate, e.g. to prevent them from ending up in the air, but are instead completely removed from the substrate.

### Brief description of drawings

Further characteristics of the invention will be explained below, with reference to embodiments, which are displayed in the appended drawings, in which:
Figure 1 schematically depicts an embodiment of the manure removal device according to the present invention during use within substrate in a poultry barn,
Figure 2 depicts a perspective view on the manure removal device of figure 1,
Figure 3A depicts a schematic side-view on the manure removal device of figure 1,
Figure 3B depicts a schematic side-view on an alternative embodiment of the manure removal device,
Figure 4A depicts a schematic side-view on a different embodiment of the manure removal device,
Figure 4B depicts a schematic side-view on a further alternative embodiment of the manure removal device,
Figure 5A schematically depicts a side view on an embodiment of the manure removal system according to the present invention,
Figure 5B schematically depicts a top view on the manure removal system of figure 5A,
Figure 6A schematically depicts a side view on an alternative embodiment of the manure removal system according to the present invention,
Figure 6B schematically depicts a top view on the manure removal system of figure 6A, and
Figures 7A - 7C depict an embodiment of the base station in an embodiment of the manure removal system according to the present invention.

Throughout the figures, the same reference numerals are used to refer to corresponding components or to components that have a corresponding function.

### Detailed description of embodiments

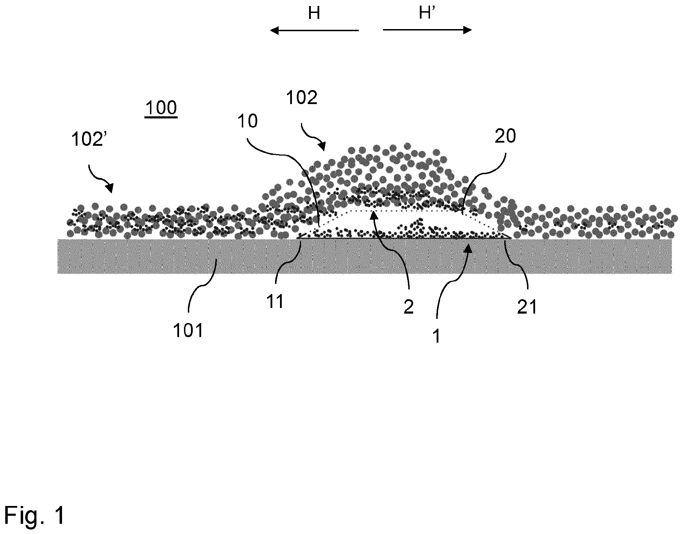

Figure 1 schematically depicts an embodiment of the manure removal device, to which is referred with reference numeral 1. The manure removal device 1 is configured to be arranged on a floor 101 in a poultry barn 100. On the floor 101, a substrate 102 is present, which is formed by coarse wood shavings, which are represented by the large dots in figure 1, and fine manure particles, which are represented by the small dots in figure 1.

The manure removal device 1 is configured to be moved in a horizontal movement direction through the substrate 102, in order to remove the fine manure particles from the substrate 102.

The manure removal device 1 comprises a top plane 2, which is configured to form a support for the substrate 102 to rest on. The top plane 2 comprises a first ramp portion 10 that comprises a front edge 11, seen with respect to a first horizontal movement direction H. The manure removal device 1 is configured to be moved in the first horizontal movement direction H with respect to the substrate 102, in order to effect an upward displacement of the substrate 102 over the first ramp portion 10 relative to the manure removal device 1 and to agitate the substrate 102 therewith. The front edge 11 of the first ramp portion 10 is thereby configured to be skid underneath at least part of the substrate 102. The part of the substrate 102 that is located on the first ramp portion 10 is, in the first horizontal movement direction H, blocked by neighbouring substrate 102', thereby preventing horizontal movement of this part of the substrate 102 in the first horizontal movement direction H. As a result, the part of the substrate 102 is moved upward over the first ramp portion 10 upon movement of the manure removal device 1 in the first horizontal movement direction H. As a result, the moving manure removal device 1 will effect a vertical displacement of the substrate 102 arranged on the first ramp portion 10, thereby effecting agitation of the substrate 102. The relative displacement of the manure removal device 1 with respect to the substrate will effect a density-based, e.g. particle-size -based separation in the substrate 102, which causes the fine manure particles to sink below the coarser particles as a result of their smaller size.

The top plane 2 further comprises a second ramp portion 20 comprising a rear edge 22, seen with respect to the first horizontal movement direction H. The manure removal device 1 is further configured to be moved in a second horizontal movement direction H' with respect to the substrate 102. This second horizontal movement direction H' is aligned anti-parallel with the first horizontal movement direction H. By moving in the second horizontal movement direction H', the manure removal device 1 is configured to effect an upward displacement of the substrate 102 over the second ramp portion 20 relative to the manure removal device 1 and to agitate the substrate therewith as well.

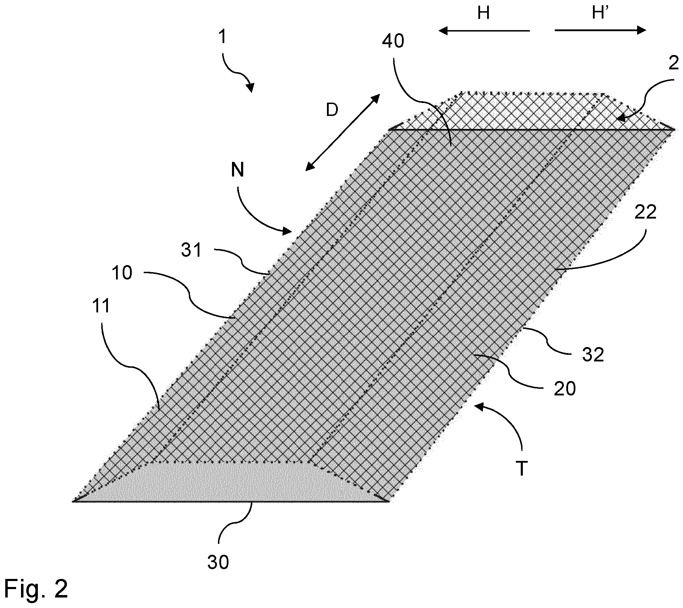

It is shown in figures 1 and 2 that the manure removal device 1 further comprises a bottom plane 30 that comprises a front edge 31, seen with respect to the first horizontal movement direction H. The manure removal device 1 is adapted to rest on the floor 101 with the bottom plane 30, thereby functioning as a support for the manure removal device 1. The front edge 31 of the bottom plane 30 is connected to the front edge 11 of the first ramp portion 10 and the first ramp portion 10 is aligned at a first sharp angle with the bottom plane 30, in order to form a nose portion N between the first ramp portion 10 and the bottom plane 30.

The bottom plane 30 further comprises a rear edge 32, which is located opposite to its front edge 31, seen with respect to the first horizontal movement direction H. The rear edge 32 of the bottom plane 30 is thereby connected to the rear edge 22 of the second ramp portion 20 and the second ramp portion 20 is aligned at a second sharp angle with the bottom plane 30, in order to form a tail portion T between the second ramp portion 20 and the bottom plane 30.

The manure removal device 1 thus comprises both a nose portion N, facing in the first horizontal movement direction H, and a tail portion T, which faces in the second horizontal movement direction H'. The manure removal device 1 can be used in two opposite directions for removing fine manure particles: by moving the manure removal device 1 in the first horizontal direction H, the substrate 102 is moved over the first ramp portion 10, and by moving the manure removal device 1 back in the second horizontal direction H', the substrate 102 is moved over the second ramp portion 20.

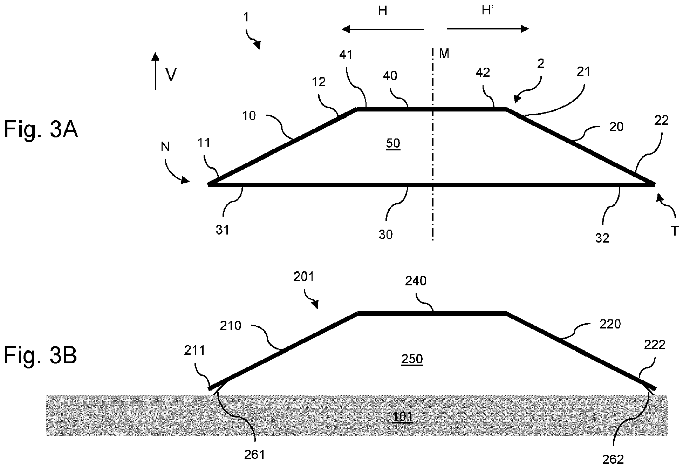

Seen from the side, as shown in figure 3A, perpendicular to the horizontal movement direction H, the manure removal device 1 is mirror symmetric through a mirror plane M that is aligned perpendicular to the horizontal movement direction H. Hence, the first ramp portion 10 is opposed symmetrically by the second ramp portion 20 and the nose portion N is opposed symmetrically by the tail portion T.

The top plane 2 of the manure removal device 1 is provided as a stainless steel plate. Similarly, the bottom plane 30 of the manure removal device 1 is provided as a stainless steel plate as well. The front edge 31 of the bottom plane 30 is fixedly connected to the front edge 11 of the first ramp portion 10 by a welded connection, which extends in a transverse horizontal direction D, perpendicular to the horizontal movement direction H. Similarly, the rear edge 32 of the bottom plane 30 is fixedly connected to the rear edge 22 of the second ramp portion 20 by a welded connection, which also extends also extends in the transverse horizontal direction D.

The first ramp portion 10 further comprises a rear edge 12, which is located opposite to its front edge 11, seen with respect to the first horizontal movement direction H. Similarly, the second ramp portion 20 further comprises a front edge 21, which is located opposite to its rear edge 22. The top plane 2 further comprises a flat portion 40 comprising a front edge 41 and a rear edge 42, which is located opposite to its front edge 41, seen with respect to the first horizontal movement direction H.

The flat portion 40 is, during use of the manure removal device 1, aligned substantially parallel to the floor 101 of the barn 100 and spaced at a distance from the floor 101 in a vertical direction V, perpendicular to the horizontal movement direction H. The rear edge 12 of the first ramp portion 10 is connected to the front edge 41 of the flat portion 40 and the front edge 21 of the second ramp portion 20 is connected to the rear edge 42 of the flat portion 40. The flat portion 40 is aligned substantially parallel to the bottom plane 30 and is spaced at a distance from the bottom plane 30 in the vertical direction V.

The rear edge 12 of the first ramp portion 10 is fixedly connected to the front edge 41 of the flat portion 40 by a welded connection that extends in the transverse horizontal direction D. Similarly, the front edge 21 of the second ramp portion 20 is fixedly connected to the rear edge 42 of the flat portion 40 by a welded connection that extends in the transverse horizontal direction D as well.

Seen from the side, as shown in figure 3A, the manure removal device 1 has a trapezium shape, with the first ramp portion 10 forming a first standing edge of the trapezium, the second ramp portion 20 forming a second standing edge of the trapezium, the flat portion forming 40 a first flat edge of the trapezium and the bottom plane 30 forming a second flat edge of the trapezium.

The top plane 2 and the bottom plane 30 together define an interior 50 of the manure removal device 1. The interior 50 is shielded from the substrate 102 by the top plane 2, which forms a separation between the substrate 102, e.g. on top of it, and the interior 50 of the manure removal device 1, e.g. underneath it. The bottom plane 30 delimits the interior 50 from underneath, to prevent the substrate 102 from entering the interior 50 from below.

It is shown best in figure 2 that the first ramp portion 10, the second ramp portion 20 and the flat portion 40 all comprise a mesh to provide access towards the interior 50 of the manure removal device 1. The mesh is configured to allow fine manure particles to enter the interior 50 of the manure removal device 1, but to prevent coarse lumps of manure and the substrate 102 itself from entering the interior 50. Once collected in the interior 50 of the manure removal device 1, the fine manure particles are trapped and cannot escape again into the substrate 102. In this way, the manure particles can be completely removed from the substrate 102.

Figure 3B depicts an alternative embodiment of the manure removal device, referred to with reference numeral 201. This manure removal device 201 comprises a top plane 202 with a first ramp portion 210, a second ramp portion 220 and a flat portion 240 in between the ramp portions 210, 220, by which an interior 250 of the manure removal device 201 is defined. In this manure removal device 201, a bottom plane is absent. Instead, the top plane 202 contacts the floor 101 by resting thereon, to prevent substrate from moving underneath the top plane 202 and into the interior 250 of the manure removal device 201.

This manure removal device 201 additionally comprises a first scraper element 261 at the front edge 211 of the first ramp portion 210 and a second scraper element 262 at the rear edge 222 of the second ramp portion 220. These scraper elements 261, 262 are configured to contact the floor 101 of the barn during use of the manure removal device 201 and contribute in the dragging of the fine manure particles inside the interior 250 of the manure removal device 201, in the absence of a bottom plane. The scraper elements 261, 262 are embodied as plastic flexible plates, to contact the floor 101 and to closely follow the contours of the floor 101 during movement of the manure removal device 201.

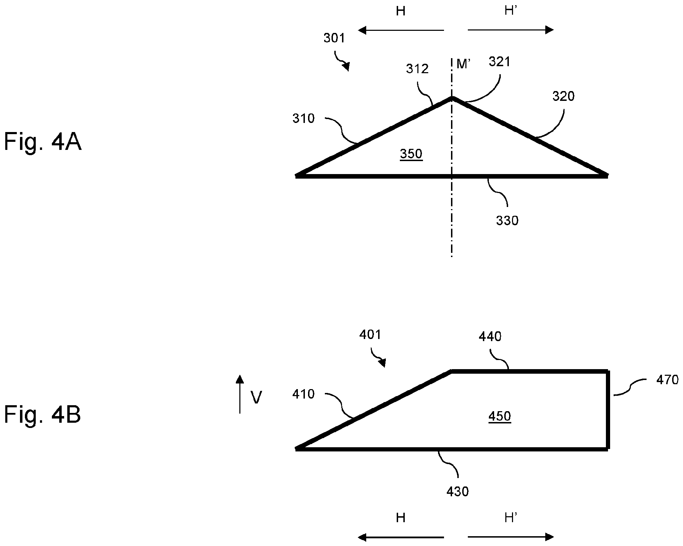

Figure 4A depicts a different embodiment of the manure removal device, referred to with reference numeral 301. This manure removal device 301 comprises a top plane 302 with a first ramp portion 310 and a second ramp portion 320 and further comprises a bottom plane 330, between which an interior 350 of the manure removal device 301 is defined.

This manure removal device 301 does not comprise a flat portion in between the ramp portions 310, 320. Instead, the rear edge 312 of the first ramp portion 310 is directly connected to the front edge 321 of the second ramp portion 320. Seen from the side, as in figure 4A, the manure removal device 301 has a triangular shape, with the first ramp portion 310 forming a first leg of the triangle, the second ramp portion 320 forming a second leg of the triangle and the bottom plane 330 forming a third leg of the triangle.

The triangular shape is a mirror symmetric triangle, having a mirror plane M' through the connection between the rear edge 312 of the first ramp portion 310 and the front edge 321 of the second ramp portion 320, which mirror plane M' is aligned perpendicular to the horizontal movement direction H. Hence, the first ramp portion 310 is opposed symmetrically by the second ramp portion 320.

Figure 4B depicts a schematic side-view on a further alternative embodiment of the manure removal device, to which is referred with reference numeral 401. This manure removal device 401 comprises a top plane 402 with a first ramp portion 410 and a flat portion 440 and further comprises a bottom plane 430. Additionally, the manure removal device 401 comprises a rear plane 470, aligned in the vertical direction V. An interior 450 of the manure removal device 401 is defined between the top plane 402, the bottom plane 430 and the rear plane 470.

With the rear plane 470 being aligned vertically, this manure removal device 401 is only configured to agitate the substrate while moving in the first horizontal direction H. With a second ramp portion being absent, this manure removal device 401 may not be able to also the agitate the substrate when it would be moved in a second horizontal movement direction H' that is aligned anti-parallel with the first horizontal movement direction H. Hence, when the manure removal device 401 were to be moved in the second horizontal movement direction H', it would act as s a plough, merely pushing the substrate in front of itself and not letting the substrate move over its top plane 402.

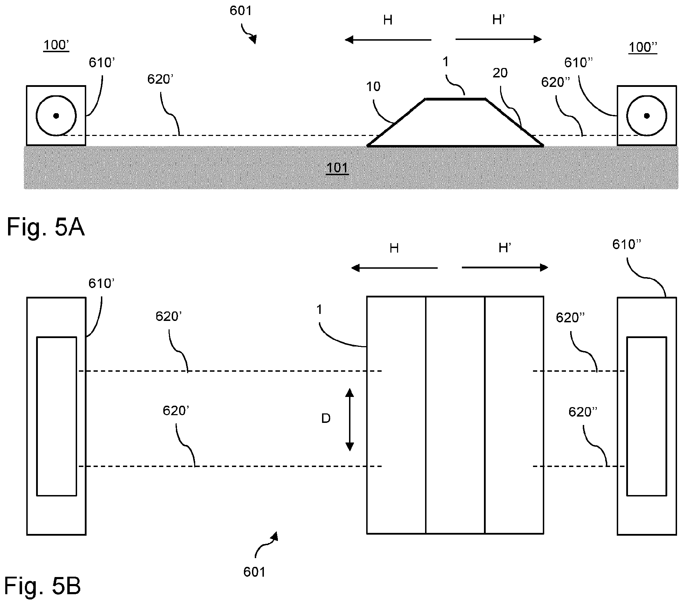

Figure 5A schematically depicts a side view on an embodiment of the manure removal system according to the present invention, to which is referred with reference numeral 601. Figure 5B schematically depicts a top view on the manure removal system 601 of figure 5A.

The manure removal system 601 is configured to remove manure particles from the substrate arranged on the floor 101 of a poultry barn. The manure removal system 601 comprises the manure removal device 1 as described herein and shown in figures 1, 2 and 3A. The manure removal system 601 further comprises two winches 610, which are provided as actuator devices for the manure removal device 1. Each winch 610 is connected to the manure removal device 1 by means of a respective set of lines 620.

A first one of the actuator devices 610' is connected to the manure removal device 1 via a first set of lines 620' and a second one of the actuator devices 610" is connected to the manure removal device 1 via a second set of lines 620". Each line 620 thereby comprises a first end that is attached to the manure removal device 1 and a second end, opposite to the first end, that is attached to the respective actuator device 610.

Each set of lines 620 comprises two lines that extend parallel to each other in between the actuator devices 610 and the manure removal device 1, in order to effect even and symmetric pulling on the manure removal device 1. The two lines contribute in keeping the manure removal device 1 aligned perpendicular to the horizontal movement direction H, in order to maximize its effective length, e.g. in the transverse direction D perpendicular to the horizontal movement direction H, to maximize the amount of the substrate that is agitated.

The actuator devices 610 are positioned stationary in the barn and are configured to pull in the lines 620 along a horizontal movement direction H, in order to move the manure removal device 1 through the substrate. Accordingly, the manure removal device 1 is moved towards the respective actuator device 610.

The first actuator device 610' is positioned at a first end 100' of the barn and the second actuator device 610" is positioned at a second end 100" of the barn, located opposite to the first end 100', when seen in the horizontal movement direction H of the manure removal device 1. The first actuator device 610' is configured to pull the manure removal device 1 in a first horizontal movement direction H via the first set of lines 620', and the second actuator device 610" is configured to pull the manure removal device 1 in a second horizontal movement direction H', aligned anti-parallel with the first horizontal movement direction H, via the second set of lines 620".

Each of the actuator devices 610 is stationary positioned at a respective opposite end of the barn and each actuator device 610 is configured to pull the manure removal device 1 in respective opposite directions, e.g. in the first horizontal movement direction H and in the second horizontal movement direction H'. Both actuator devices 610 are thereby, together, configured to move the manure removal device 1 in a back-and-forth manner.

The back-and-forth movement may be useful in moving the manure removal device 1 to agitate the substrate in both opposite directions, e.g. with the first ramp portion 10 when the manure removal device 1 is pulled in the first movement direction H and with the second ramp portion 20 when the manure removal device 1 is pulled in the second movement direction H'.

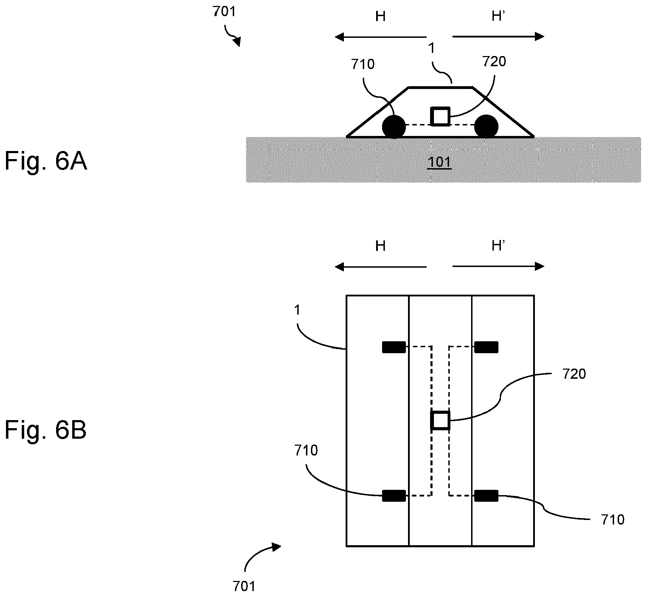

Figure 6A schematically depicts a side view on an alternative embodiment of the manure removal system according to the present invention, to which is referred with reference numeral 701. Figure 6B schematically depicts a top view on the manure removal system 701 of figure 6A.

The manure removal system 701 comprises the manure removal device 1 as described herein and shown in figures 1, 2 and 3A. This manure removal system 701 also comprises an actuator device, which comprises four traction wheels 710. The traction wheels 710 are configured to exert a propulsion force between the manure removal device 1 and the floor 101, wherein the propulsion force is aligned in a horizontal movement direction H, and wherein the propulsion force is configured to move the manure removal device 1 through the substrate. The traction wheels 710 are directly attached to the manure removal device 1 to move the manure removal device 1 through the barn, preferably not requiring any components of the manure removal system 701 that need to be arranged stationary in the barn.

The traction wheels 710 are connected to an electric motor 720, which connection is represented by the dashed lines in figures 6A and 6B. The electric motor 720 is configured to drive the traction wheels 710 in rotation, to freely move the manure removal device 1 through the barn. A rotary torque of the motor 720 is thereby be converted into the propulsion force, which is in turn configured to act onto the floor 101 during use, for propelling the manure removal device 1.

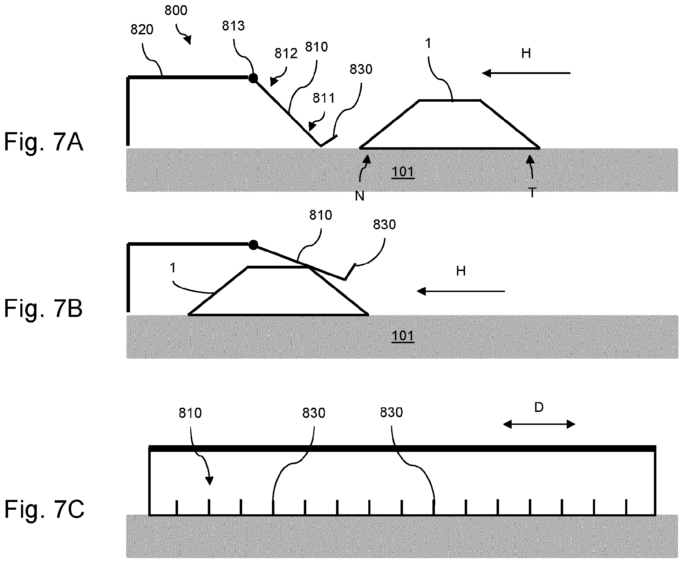

Figures 7A - 7C depict an embodiment of the base station in an embodiment of the manure removal system according to the present invention. The manure removal system in figures 7A - 7C comprises the manure removal device 1 as described herein and shown in figures 1, 2 and 3A and further comprises the base station, to which is referred with reference numeral 800.

The base station 800 is configured to form a shielded storage location for the manure removal device 1. The base station 800 thereto comprises a rotatable plate 810, comprising a front end 811 that is, in the rest position of the plate 810 in figure 7A, configured to rest on the floor 101 of the poultry barn. The plate 810 further comprises and a rear end 812 that is, via a hinge 813 at an elevated location with respect to the floor 101, connected to a stationary casing part 820 of the of the base station 800. In the shown embodiment, the height of the elevated location substantially corresponds to the height of the manure removal device 1.

The base station 800 further comprises a number of ribs 830, which are attached to the rotatable plate 810 at the front end 811 thereof and which extend away from the rotatable plate 810. Furthermore, in the rest position shown in figure 7A, the ribs 830 also extend away from the floor 101. The benefit of having ribs 830, instead of for example a smooth plate extending upwardly away from the rotatable plate, is that the substrate may fall in between the ribs to prevent accumulation of substrate on the rotatable plate.

The manure removal device 1 is configured to be moved underneath the ribs 830 of the base station 800 with its nose portion N. However, if the manure removal device 1 were to be moved in the opposite horizontal movement direction, it may as well be moved underneath the ribs 830 with its tail portion T. It is shown in figure 7A that in the rest position of the rotatable plate 810, the ribs 830 are spaced at a distance from the floor 101, e.g. a distance larger than the height of the nose portion N and/or tail portion T of the manure removal device 1, to allow the nose portion N or the tail portion T to be moved underneath it.

By moving underneath the ribs 830, the manure removal device 1 is configured to upwardly rotate the rotatable plate 810 towards an elevated shielding position with the ribs 830 sliding over the respective ramp portion of the manure removal device 1. Next, the manure removal device 1 is configured to be moved completely underneath the rotatable plate 810, as is shown in figure 7B.

In the elevated shielding position of figure 7B, the rotatable plate 810 is located above the maximum height of the manure removal device 1, allowing the manure removal device 1 to be arranged underneath the rotatable plate 810, e.g. at least with the part of the manure removal device's top plane that is provided with the mesh, to prevent the interior of the manure removal device 1 from filing up with manure particles while the manure removal device 1 is inactive in the base station 800.

Figure 7C shows a side view onto the rotatable plate 810, along the horizontal movement direction H. The ribs 830 of the base station 800 are shown to be spread over the width of the rotatable plate 810 in the transverse horizontal direction D to increase the number of points of contact between the rotatable plate 810, e.g. the ribs 830 thereof, and the manure removal device 1.

## Claims

1. Manure removal device, configured to be moved in a horizontal movement direction through a substrate arranged on a floor of a poultry barn, in order to remove manure particles from the substrate, comprising:
- a top plane, which is configured to form a support for the substrate to rest on, wherein the top plane comprises a first ramp portion comprising a front edge, seen with respect to a first horizontal movement direction, and
wherein the manure removal device is configured to be moved in the first horizontal movement direction with respect to the substrate, in order to effect an upward displacement of the substrate over the first ramp portion relative to the manure removal device and to agitate the substrate therewith.

2. Manure removal device according to claim 1, further comprising a bottom plane that comprises a front edge, seen with respect to the first horizontal movement direction, wherein the manure removal device is adapted to rest on the floor and/or substrate with the bottom plane,
wherein the front edge of the bottom plane is connected to the front edge of the first ramp portion, and
wherein the first ramp portion is aligned at a first sharp angle with the bottom plane, in order to form a nose portion between the first ramp portion and the bottom plane.

3. Manure removal device according to claim 1 or 2, wherein the top plane further comprises a second ramp portion comprising a rear edge, seen with respect to the first horizontal movement direction, and
wherein the manure removal device is further configured to be moved in a second horizontal movement direction with respect to the substrate, aligned anti-parallel with the first horizontal movement direction, in order to effect an upward displacement of the substrate over the second ramp portion relative to the manure removal device and to agitate the substrate therewith.

4. Manure removal device according to claim 3, wherein the first ramp portion further comprises a rear edge, which is located opposite to its front edge, seen with respect to the first horizontal movement direction,
wherein the second ramp portion further comprises a front edge, which is located opposite to its rear edge, seen with respect to the first horizontal movement direction, and
wherein the rear edge of the first ramp portion is connected to the front edge of the second ramp portion.

5. Manure removal device according to claim 3 or 4, wherein the first ramp portion further comprises a rear edge, which is located opposite to its front edge, seen with respect to the first horizontal movement direction,
wherein the top plane further comprises a flat portion comprising a front edge, seen with respect to the first horizontal movement direction,
wherein the flat portion is, during use of the manure removal device, adapted to be aligned substantially parallel to the floor of the barn and spaced at a distance from the floor in a vertical direction, perpendicular to the horizontal movement direction, thereby defining a height of the manure removal device, and
wherein the rear edge of the first ramp portion is connected to the front edge of the flat portion.

6. Manure removal device according to claims 3 and 5, wherein the flat portion further comprises a rear edge, which is located opposite to its front edge, seen with respect to the first horizontal movement direction, and
wherein the front edge of the second ramp portion is connected to the rear edge of the flat portion.

7. Manure removal device according to any of the preceding claims, wherein the top plane defines an interior of the manure removal device,
wherein at least part of the first ramp portion, the second ramp portion and/or the flat portion comprises a mesh to provide access towards the interior of the manure removal device,
wherein the manure removal device is configured to enable access of the manure particles into its interior via the mesh, and
wherein a mesh width of the mesh is preferably in between 1 mm and 5 mm, for example 2.5 mm.

8. Manure removal device according to any of the preceding claims, wherein the first sharp angle and/or the second sharp angle is in between 10° and 60°, for example about 30°.

9. Manure removal device according to any of the preceding claims, wherein the height of the manure removal device in the vertical direction is in between 5 mm and 25 mm, for example 15 mm.

10. Manure removal device according to any of the preceding claims, wherein a length of the manure removal device in a transverse horizontal direction, perpendicular to the horizontal movement direction, is in between 500 mm and 2000 mm, for example 1150 mm

11. Manure removal system for removing manure particles from a substrate arranged on a floor of a poultry barn, comprising:
- the manure removal device according to any of the preceding claims,
- at least one actuator device, for example comprising a winch, and
- at least one line, for example a cable and/or a chain, each line comprising a first end that is attached to the manure removal device and a second end, opposite to the first end, that is attached to the actuator device,
wherein the at least one actuator device is configured to be positioned stationary in the poultry barn and configured to pull in the at least one line along a horizontal movement direction, in order to move the manure removal device through the substrate.

12. Manure removal system according to claim 11, wherein a first one of the at least one actuator devices is connected to the manure removal device via a first one of the at least one lines,
wherein a second one of the at least one actuator devices is connected to the manure removal device via a second one of the at least one lines,
wherein the first actuator device is configured to be positioned at a first end of the barn,
wherein the second actuator device is configured to be positioned at a second end of the barn, located opposite to the first end of the barn,
wherein the first actuator device is configured to pull the manure removal device in a first horizontal movement direction via the first line, and
wherein the second actuator device is configured to pull the manure removal device in a second horizontal movement direction, aligned anti-parallel with the first horizontal movement direction, via the second line.

13. Manure removal system for removing manure particles from a substrate arranged on a floor of a poultry barn, comprising:
- the manure removal device according to any of the claims 1 - 10, and
- an actuator device, for example comprising one or more traction wheels or one or more caterpillar tracks,
wherein the actuator device is configured to exert a propulsion force between the manure removal device and the floor and/or the substrate,
wherein the propulsion force is aligned in a horizontal movement direction, and wherein the propulsion force is configured to move the manure removal device through the substrate.

14. Manure removal system according to any of the claims 11 - 13, further comprising a base station, configured to form a shielded storage location for the manure removal device, comprising:
- a rotatable plate, comprising a front end that is, in a rest position of the plate, configured to rest on the floor of the poultry barn and a rear end that is attached to a hinge at an elevated location, wherein a height of the elevated location substantially corresponds to the height of the manure removal device, wherein the rotatable plate is configured to form a support for the substrate to rest on, and
- at least one rib, attached to the rotatable plate at the front end thereof and extending away from the rotatable plate and, in the rest position, away from the floor, wherein the manure removal device is configured to be moved underneath the at least one rib with its nose portion and/or its tail portion, in order to upwardly rotate the rotatable plate towards an elevated shielding position with the at least one rib sliding over the respective first ramp portion and/or second ramp portion, and wherein the manure removal device is configured to be moved underneath the rotatable plate.

15. Method for removing manure particles from a substrate arranged on a floor of a poultry barn, comprising the steps of:
- arranging a manure removal device according to any of the claims 1 - 10 on the floor of the poultry barn,
- moving the manure removal device through the substrate in a horizontal movement direction, and
- agitating the substrate by effecting an upward displacement of the substrate over the first ramp portion and/or the second ramp portion of the manure removal device, thereby:
- effecting a density-based separation of relatively small manure particles sinking in the substrate.

16. Method according to claim 15, further comprising the step of collecting the manure particles in an interior of the manure removal device via mesh in the first ramp portion, the second ramp portion and/or the flat portion of the manure removal device.
